# EUROPÄISCHE PATENTSCHRIFT

(11) **EP 2 782 718 B1**
(45) Veröffentlichungstag und Bekanntmachung des Hinweises auf die Patenterteilung: **13.04.2016**
(21) Anmeldenummer: 12787681.1
(22) Anmeldetag: 07.11.2012
(51) Int. Cl.: B25H 3/02

(54) **HANDWERKZEUGKOFFERHALTEVORRICHTUNG**
HOLDING DEVICE FOR THE CASING OF A HAND-HELD TOOL
DISPOSITIF DE FIXATION POUR MALLETTE D'OUTIL À MAIN

(30) Priorität: 22.11.2011 DE 102011086801
(43) Veröffentlichungstag der Anmeldung: 01.10.2014
(73) Patentinhaber: Robert Bosch GmbH, 70442 Stuttgart (DE)
(72) Erfinder: REJMAN, Marcin, 71332 Waiblingen (DE)
(86) Internationale Anmeldenummer: PCT/EP2012/072007
(87) Internationale Veröffentlichungsnummer: WO 2013/075943

(56) Entgegenhaltungen:
- EP-A1- 1 563 965
- EP-A2- 2 289 671
- KR-A- 20110 107 728
- US-B1- 7 462 951

## Beschreibung

### Stand der Technik

Es ist in der Druckschrift DE 10 2008 058 007 B3 bereits eine Handwerkzeugkofferhaltevorrichtung mit zumindest einer Haltevorrichtung, die dazu vorgesehen ist, einen Handwerkzeugkoffer in einem Kofferaufnahmebereich lösbar zu befestigen, vorgeschlagen worden.

Aus EP 1 563 965 A1 ist ein Lagerbehälter für Nutzfahrzeuge bekannt, der aus einer ausbaufähigen Anzahl an Gestellen und Koffern besteht.

### Offenbarung der Erfindung

Die Erfindung geht aus von einer Handwerkzeugkofferhaltevorrichtung mit zumindest einer Haltevorrichtung, die dazu vorgesehen ist, einen Handwerkzeugkoffer in einem Kofferaufnahmebereich der Handwerkzeugkofferhaltevorrichtung lösbar zu befestigen.

Es wird vorgeschlagen, dass die Handwerkzeugkofferhaltevorrichtung zumindest eine Ladespule und ein Lagermittel aufweist, das dazu vorgesehen ist, die Ladespule und die Haltevorrichtung relativ zueinander bewegbar zu lagern. Unter einer "Haltevorrichtung" soll insbesondere eine Vorrichtung verstanden werden, die dazu vorgesehen ist, in zumindest einem Betriebszustand eine Bewegung des Handwerkzeugkoffers aus dem Kofferaufnahmebereich heraus zu verhindern. Bevorzugt verhindert die Haltevorrichtung in zumindest einem Betriebszustand eine Bewegung des Handwerkzeugkoffers von einer Richtung der Bewegung unabhängig. Vorzugsweise befestigt die Haltevorrichtung den Handwerkzeugkoffer zumindest bei einem Ladevorgang kraftschlüssig und/oder vorteilhaft formschlüssig. Unter "vorgesehen" soll insbesondere speziell programmiert, ausgelegt und/oder ausgestattet verstanden werden. Insbesondere soll unter einem "Handwerkzeugkoffer" ein Koffer verstanden werden, der in einem geschlossenen Zustand einen Werkzeugaufnahmebereich stoßgeschützt, feuchtigkeitsgeschützt und/oder staubgeschützt begrenzt. Vorzugsweise begrenzt der Handwerkzeugkoffer den Werkzeugaufnahmebereich zumindest teilweise in Form eines Handwerkzeugakkus. Bevorzugt weist der Handwerkzeugkoffer zumindest ein Befestigungsmittel zur Befestigung eines Handwerkzeugs, eines Handwerkzeugs mit einem angeschlossenen Handwerkzeugakku und/oder besonders bevorzugt eines Handwerkzeugakkus auf. Vorzugsweise ist der Handwerkzeugkoffer magnetisch und/oder vorteilhaft elektrisch passiv. Insbesondere weist der Handwerkzeugkoffer keine Elektrik auf. Alternativ oder zusätzlich könnte der Handwerkzeugkoffer eine Ladespule und/oder vorteilhaft einen Magnetfeldleiter aufweisen, der die Energie empfängt und drahtgebunden und/oder magnetisch an einen Handwerkzeugakku weiterleitet. Vorzugsweise ist der Handwerkzeugkoffer entsprechend des in der Druckschrift DE 10 2008 058 007 B3 vorgeschlagenen Handwerkzeugkoffers ausgebildet, weist jedoch einen Handwerkzeugaufnahmebereich und/oder einen Handwerkzeugakkuaufnahmebereich auf, der dazu vorgesehen ist, bei einem Ladevorgang einen induktiv ladbaren Handwerkzeugakku aufzunehmen. Unter einem "Kofferaufnahmebereich" soll insbesondere ein Bereich der Handwerkzeugkofferhaltevorrichtung verstanden werden, in dem der Handwerkzeugkoffer zumindest bei einem Ladevorgang angeordnet ist. Vorzugsweise begrenzt ein Haltevorrichtungsgehäuse der Handwerkzeugkofferhaltevorrichtung den Kofferaufnahmebereich auf zumindest einer Seite. Insbesondere soll unter dem Begriff "lösbar" verstanden werden, dass die Haltevorrichtung den Handwerkzeugkoffer in einem Zustand befestigt und diese Befestigung in einem anderen Zustand von einem Bediener zerstörungsfrei und/oder reversibel trennbar ist. Vorzugsweise befestigt die Haltevorrichtung den Handwerkzeugkoffer werkzeuglos lösbar. Unter der Wendung "werkzeuglos lösbar" soll insbesondere verstanden werden, dass eine Verbindung der Haltevorrichtung mit dem Handwerkzeugkoffer von einem Bediener mit der Hand lösbar ausgebildet ist. Vorzugsweise weist die Haltevorrichtung und/oder vorteilhaft der Handwerkzeugkoffer zumindest ein Bedienelement auf, das bei einer Betätigung durch einen Bediener eine Befestigung des Handwerkzeugkoffers an der Haltevorrichtung löst. Insbesondere soll unter einer "Ladespule" eine Spule verstanden werden, die bei einem Ladevorgang eine Energie empfängt und/oder sendet. Vorzugsweise sendet die Ladespule der Handwerkzeugkofferhaltevorrichtung bei einem Ladevorgang eine Energie, die eine in dem Kofferaufnahmebereich angeordnete Ladespule eines Handwerkzeugs und/oder vorteilhaft eines Handwerkzeugakkus empfängt. Vorzugsweise umfasst die Ladespule zumindest eine Spulenwicklung, einen Spulenkern und insbesondere ein Spulengehäuse, das zumindest die Spulenwicklung und den Spulenkern verbindet. Unter einem "Lagermittel" soll in diesem Zusammenhang insbesondere ein Mittel verstanden werden, das dazu vorgesehen ist, die Ladespule bei einer Bewegung auf einer vorgesehenen Bahn zu halten. Vorzugsweise bewirkt das Lagermittel Lagerkräfte auf die Ladespule, die senkrecht zu einer Richtung der Bewegung der Ladespule ausgerichtet sind. Vorzugsweise führt das Lagermittel die Ladespule mit einer zumindest zeitweise linearen vorzugsweise translatorischen Bewegung. Insbesondere soll unter der Wendung "relativ zueinander bewegbar" verstanden werden, dass die Ladespule in zwei Betriebszuständen bezogen auf die Haltevorrichtung unterschiedlich angeordnet ist. Durch die erfindungsgemäße Ausgestaltung der Handwerkzeugkofferhaltevorrichtung kann ein Spiel der Haltevorrichtung bei einer Befestigung des Handwerkzeugkoffers vorteilhaft ausgeglichen werden, und somit die Ladespule zuverlässig positioniert werden. Somit kann mit einer konstruktiv einfachen und bedienerfreundlichen Haltevorrichtung ein hoher Wirkungsgrad bei einer Energieübertragung erreicht werden. Insbesondere kann die Ladespule besonders nah an einer in dem Kofferaufnahmebereich angeordneten Ladespule positioniert werden.

Weiterhin wird vorgeschlagen, dass das Lagermittel dazu vorgesehen ist, die Ladespule in Richtung des Kofferaufnahmebereichs bewegbar zu lagern, wodurch konstruktiv besonders einfach eine vorteilhafte Positionierung bei einem Spiel parallel zu einer Wirkrichtung der Ladespule möglich ist. Unter der Wendung "in Richtung des Kofferaufnahmebereichs" soll insbesondere verstanden werden, dass eine Bewegung der Ladespule parallel zu dieser Richtung die Ladespule an einen in dem Kofferaufnahmebereich angeordneten Handwerkzeugkoffer annähert oder entfernt. Vorzugsweise ist die Richtung unparallel zu einer Oberfläche des in dem Kofferaufnahmebereich angeordneten Handwerkzeugkoffers ausgerichtet, die der Ladespule am nächstliegenden angeordnet ist.

In einer vorteilhaften Ausbildung der Erfindung wird vorgeschlagen, dass die Handwerkzeugkofferhaltevorrichtung zumindest ein Kraftelement aufweist, das dazu vorgesehen ist, eine Kraft zu bewirken, die zumindest die Ladespule in Richtung des Kofferaufnahmebereichs drückt, wodurch eine vorteilhaft selbsttätige Positionierung bei einem Spiel parallel zu einer Wirkrichtung der Ladespule erreicht werden kann. Insbesondere soll unter einem "Kraftelement" ein, dem Fachmann als sinnvoll erscheinendes Element, vorzugsweise jedoch ein pneumatisches Element, ein magnetisches Element und/oder besonders bevorzugt ein Federelement verstanden werden. Unter einem "Federelement" soll insbesondere ein Bauteil verstanden werden, das in einer Erstreckung in einem normalen Betriebszustand durch eine Kraft um wenigstens 10%, vorzugsweise um wenigstens 20%, besonders vorteilhaft um wenigstens 50%, elastisch verformbar ist. Vorzugsweise erzeugt das Federelement bei einer Veränderung der Erstreckung, von der Veränderung der Erstreckung abhängige, eine insbesondere zu der Veränderung proportionale Gegenkraft, die der Veränderung entgegenwirkt. Vorzugsweise ist das Federelement als eine, dem Fachmann als sinnvoll erscheinende Feder, vorteilhaft jedoch als eine Schraubenfeder, ausgebildet.

Des Weiteren wird vorgeschlagen, dass das Kraftelement und das Lagermittel zumindest teilweise einstückig ausgebildet sind, wodurch ein geringer Produktions- und Konstruktionsaufwand und damit geringe Stückkosten möglich sind. Unter der Wendung "zumindest teilweise einstückig ausgebildet" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren.

Ferner wird vorgeschlagen, dass das Kraftelement und das Lagermittel getrennt ausgebildet sind, wodurch eine besonders präzise, leichtgängige und langlebige Konstruktion erreicht werden kann. Insbesondere soll unter der Wendung "getrennt ausgebildet" verstanden werden, dass das Kraftelement und das Lagermittel in unterschiedlichen Fertigungsschritten hergestellt sind. Vorzugsweise wirken das Kraftelement und das Lagermittel in zumindest einem Betriebszustand voneinander unabhängig auf die Ladespule. Vorteilhaft sind das Kraftelement und das Lagermittel als unterschiedliche Bauteile ausgebildet.

Zudem wird vorgeschlagen, dass die Haltevorrichtung zumindest ein Haltemittel aufweist, das dazu vorgesehen ist, den Handwerkzeugkoffer zu verrasten, wodurch konstruktiv einfach eine besonders stabile, benutzerfreundliche und insbesondere selbsttätig schließende Befestigung möglich ist. Unter einem "Haltemittel" soll insbesondere ein Mittel verstanden werden, das in zumindest einem Betriebszustand zu einer Befestigung des Werkzeugkoffers eine Kraft direkt auf den Werkzeugkoffer bewirkt. Vorzugsweise ist das Haltemittel korrespondierend zu einem und/oder gemäß einem in der Druckschrift DE 10 2008 058 007 B3 vorgeschlagenen Haltemittel ausgebildet. Insbesondere soll unter "verrasten" verstanden werden, dass ein Haltemittel bei einem Befestigungsvorgang des Handwerkzeugkoffers elastisch ausgelenkt wird, um anschließend durch eine auf das Haltemittel wirkende Kraft hinter einem korrespondierenden Haltemittel einzuhaken. Vorzugsweise ist das elastisch auslenkbare Haltemittel an dem Handwerkzeugkoffer angeordnet und das korrespondierende Haltemittel an der Handwerkzeugkofferhaltevorrichtung angeordnet.

Weiterhin wird vorgeschlagen, dass die Ladespule dazu vorgesehen ist, eine Energie auf eine in dem Kofferaufnahmebereich angeordnete Ladespule zu übertragen, wodurch es möglich ist einen Handwerkzeugakku induktiv zu laden ohne diesen aus dem Handwerkzeugkoffer zu entnehmen. Insbesondere soll unter dem Begriff "überragen" verstanden werden, dass die Ladespule eine elektrische Energie mittels eines magnetischen Wechselfeldes an die in dem Kofferaufnahmebereich angeordnete Ladespule sendet. Vorzugsweise ist die in dem Kofferaufnahmebereich angeordnete Ladespule Teil des Handwerkzeugkoffers und/oder besonders bevorzugt Teil eines in dem Handwerkzeugkoffer angeordneten Handwerkzeugakkus. Unter einem "Handwerkzeugakku" soll insbesondere ein Akku verstanden werden, der dazu vorgesehen ist, ein Handwerkzeug mit einer Energie zu versorgen. Vorzugsweise ist der Akku insbesondere werkzeuglos lösbar mit dem Handwerkzeug verbunden. Alternativ oder zusätzlich könnte ein Handwerkzeugakku in das Handwerkzeug integriert sein. Insbesondere soll unter einem "Handwerkzeug" ein, dem Fachmann als sinnvoll erscheinendes tragbares Werkzeug, vorteilhaft jedoch eine Bohrmaschine, ein Bohrhammer, ein Schlaghammer, eine Säge, ein Hobel, ein Schrauber, eine Fräse, ein Schleifer, ein Winkelschleifer, ein Gartengerät, ein Baustellenmessgerät und/oder ein Multifunktionswerkzeug, verstanden werden.

In einer vorteilhaften Ausbildung der Erfindung wird vorgeschlagen, dass die Handwerkzeugkofferhaltevorrichtung ein Haltevorrichtungsgehäuse aufweist, das zumindest teilweise einstückig mit dem Lagermittel ausgebildet ist, wodurch ein geringer Produktions- und Konstruktionsaufwand und damit geringe Stückkosten möglich sind. Unter einem "Haltevorrichtungsgehäuse" soll eine Einheit verstanden werden, die in einem betriebsbereiten Zustand zumindest die Haltevorrichtung und das Lagermittel mechanisch verbindet. Vorzugsweise umschließt das Haltevorrichtungsgehäuse einen Innenraum, in dem vorteilhaft eine Ladeelektronik der Handwerkzeugkofferhaltevorrichtung angeordnet ist. Unter einer "Ladeelektronik" soll insbesondere eine Elektronik verstanden werden, die einen Ladezustand eines Handwerkzeugakkus überwacht und davon abhängig einen Ladevorgang des Handwerkzeugakkus steuert und/oder vorzugsweise regelt.

Des Weiteren wird vorgeschlagen, dass die Handwerkzeugkofferhaltevorrichtung ein Haltevorrichtungsgehäuse umfasst, das getrennt von dem Lagermittel ausgebildet ist, wodurch eine besonders präzise, leichtgängige und langlebige Konstruktion erreicht werden kann.

Ferner wird vorgeschlagen, dass das Kraftelement zumindest einen Bereich des Haltevorrichtungsgehäuses bewegbar lagert, wodurch ein geringer Produktions- und Konstruktionsaufwand und damit geringe Stückkosten möglich sind. Unter einem "Bereich des Haltevorrichtungsgehäuses" soll insbesondere ein Bauteil verstanden werden, das in zumindest einem Betriebszustand den Innenraum der Handwerkzeugkofferhaltevorrichtung begrenzt oder einstückig mit einem solchen Bauteil ausgebildet ist.

Zudem wird vorgeschlagen, dass das Kraftelement wirkungsmäßig zwischen dem Haltevorrichtungsgehäuse und der Ladespule angeordnet ist, wodurch ein konstruktiv einfaches Kraftelement verwendbar ist. Insbesondere soll unter der Wendung "wirkungsmäßig zwischen dem Haltevorrichtungsgehäuse und der Ladespule" verstanden werden, dass das Kraftelement eine auf die Ladespule wirkende Kraft an dem Haltevorrichtungsgehäuse abstützt.

Des Weiteren wird ein System mit einer erfindungsgemäßen Handwerkzeugkofferhaltevorrichtung und zumindest einem Handwerkzeugkoffer vorgeschlagen, das zumindest eine zu der Haltevorrichtung der Handwerkzeugkofferhaltevorrichtung korrespondierende Haltevorrichtung aufweist, wodurch die Handwerkzeugkofferhaltevorrichtung vorteilhaft mit verschiedenen Handwerkzeugkoffem verbindbar ist. In diesem Zusammenhang soll unter "korrespondierend" insbesondere verstanden werden, dass die Haltevorrichtung des Handwerkzeugkoffers dazu vorgesehen ist, mit der Haltevorrichtung der Handwerkzeugkofferhaltevorrichtung eine lösbare mechanische Verbindung einzugehen. Vorzugsweise weist der Handwerkzeugkoffer neben der ersten Haftevorrichtung eine zweite Haltevorrichtung auf, die zu einer ersten Haltevorrichtung eines Handwerkzeugkoffers korrespondierend ausgebildet ist, wodurch mehrere Handwerkzeugkoffer mittels der Haltevorrichtungen verbunden vorteilhaft gestapelt und insbesondere transportiert werden können. Vorzugsweise ist die zweite Haltevorrichtung des Handwerkzeugkoffers identisch mit der Haltevorrichtung der Handwerkzeugkofferhaltevorrichtung ausgebildet.

### Zeichnung

Weitere Vorteile ergeben sich aus der folgenden Zeichnungsbeschreibung. In der Zeichnung sind fünf Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes System mit einem Handwerkzeugkoffer und einer Handwerkzeugkofferhaltevorrichtung,
- Fig. 2: ein Haltevorrichtungsgehäuse, eine Ladespule und ein Lagermittel der Handwerkzeugkofferhaltevorrichtung aus Figur 1 in einer schematischen Schnittdarstellung, wobei das Lagermittel einstückig mit einer Seitenwand des Haltevorrichtungsgehäuses ausgebildet ist,
- Fig. 3: ein alternatives Ausführungsbeispiel des Lagermittels aus Figur 2 in einer schematischen Schnittdarstellung, wobei das Lagermittel als ein Uförmiger Bereich des Haltevorrichtungsgehäuses ausgebildet ist,
- Fig. 4: ein alternatives Ausführungsbeispiel des Lagermittels aus Figur 2 in einer schematischen Schnittdarstellung, wobei das Lagermittel außerhalb eines Haltevorrichtungsgehäuses einer Handwerkzeugkofferhaltevorrichtung angeordnet ist,
- Fig. 5: ein alternatives Ausführungsbeispiel des Systems aus Figur 1 in einer schematischen Schnittdarstellung, wobei das Lagermittel die Ladespule und einen Teil des Haltevorrichtungsgehäuses bewegbar lagert und
- Fig. 6: ein alternatives Ausführungsbeispiel des Systems aus Figur 1 in einer schematischen Schnittdarstellung, wobei das Lagermittel die Ladespule in einer Aussparung des Haltevorrichtungsgehäuses bewegbar lagert.

### Beschreibung der Ausführungsbeispiele

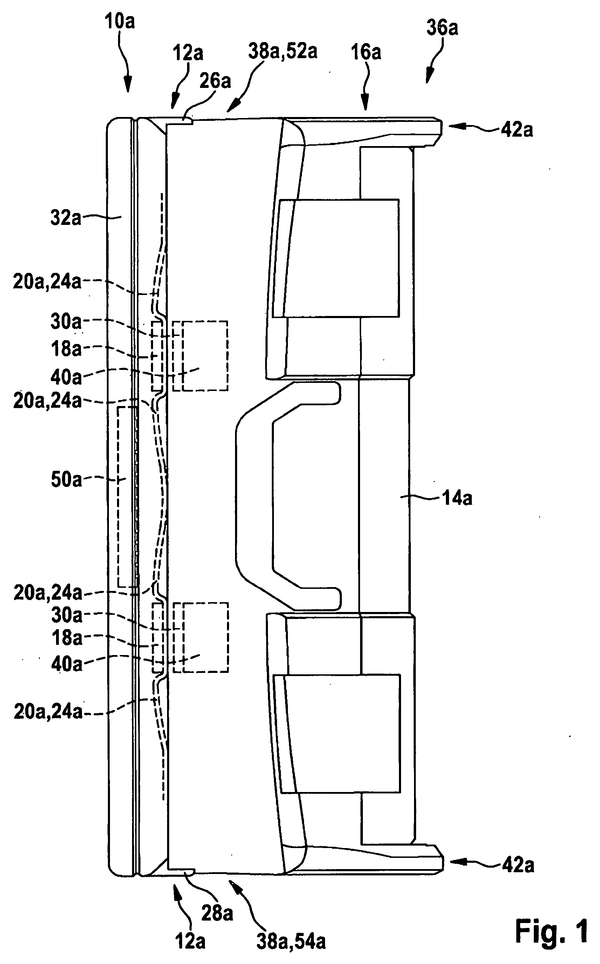

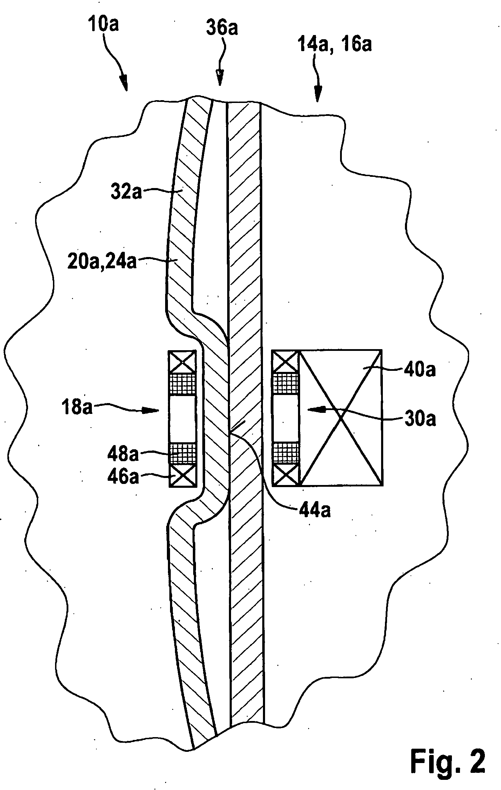

Die Figuren 1 und 2 zeigen ein System 36a mit einer Handwerkzeugkofferhaltevorrichtung 10a, einem Handwerkzeugkoffer 14a und zwei Handwerkzeugakkus 40a. Die Handwerkzeugakkus 40a sind bei einem Ladevorgang in dem Handwerkzeugkoffer 14a angeordnet. Die Handwerkzeugkofferhaltevorrichtung 10a weist eine Haltevorrichtung 12a auf, die bei dem Ladevorgang der Handwerkzeugakkus 40a den Handwerkzeugkoffer 14a in einem Kofferaufnahmebereich 16a der Handwerkzeugkofferhaltevorrichtung 10a lösbar befestigt. Der Handwerkzeugkoffer 14a weist eine erste Haltevorrichtung 38a auf, die zu der Haltevorrichtung 12a der Handwerkzeugkofferhaltevorrichtung 10a korrespondiert. Der Handwerkzeugkoffer 14a weist eine zweite Haltevorrichtung 42a auf, die entsprechend der Haltevorrichtung 12a der Handwerkzeugkofferhaltevorrichtung 10a ausgebildet ist. Somit ist die zweite Haltevorrichtung 42a des Handwerkzeugkoffers 14a dazu vorgesehen, mit einer ersten Haltevorrichtung eines anderen Handwerkzeugkoffers eine lösbare Verbindung herzustellen.

Die Handwerkzeugkofferhaltevorrichtung 10a umfasst zwei Ladespulen 18a, zwei Lagermittel 20a, zwei Kraftelemente 24a und ein Haltevorrichtungsgehäuse 32a. Zumindest eine der Ladespulen 18a überträgt bei dem Ladevorgang eine Ladeenergie auf eine in dem Kofferaufnahmebereich 16a angeordnete Ladespule 30a eines der Handwerkzeugakkus 40a. Die Lagermittel 20a lagern jeweils eine der Ladespule 18a und die Haltevorrichtung 12a relativ zueinander bewegbar. Die Lagermittel 20a sind jeweils einstückig mit einem der Kraftelemente 24a ausgebildet. Die Lagermittel 20a und die Kraftelemente 24a sind einstückig mit dem Haltevorrichtungsgehäuse 32a ausgebildet. Und zwar sind die Lagermittel 20a und die Kraftelemente 24a als im Wesentlichen flache, ringförmige Bereiche einer Wandung des Haltevorrichtungsgehäuses 32a ausgebildet. Im Bereich der Lagermittel 20a und der Kraftelemente 24a ist der Handwerkzeugkoffer 14a dünnwandig ausgebildet. Die Ladespulen 18a sind jeweils mit einem Bereich des Haltevorrichtungsgehäuses 32a verbunden, der von den ringförmigen Bereichen umschlossen ist.

Die Lagermittel 20a sind durch ein Befestigen des Handwerkzeugkoffers 14a in dem Kofferaufnahmebereich 16a von einem Bediener verformbar. Wenn der Kofferaufnahmebereich 16a frei von einem Handwerkzeugkoffer 14a ist, ist die zumindest eine Ladefläche 44a der Handwerkzeugkofferhaltevorrichtung 10a, durch die die Ladespule 18a eine Ladeenergie sendet, in dem Kofferaufnahmebereich 16a angeordnet. Dabei ist auch die Ladespule 18a der Handwerkzeugkofferhaltevorrichtung 10a teilweise in dem Kofferaufnahmebereich 16a angeordnet. Die Ladefläche 44a ist eine Außenfläche des Haltevorrichtungsgehäuses 32a.

Die Lagermittel 20a lagern die Ladespulen 18a in Richtung des Kofferaufnahmebereichs 16a bewegbar. Bei einem Einsetzen des Handwerkzeugkoffers 14a in den Kofferaufnahmebereich 16a drückt der Handwerkzeugkoffer 14a die Ladefläche 44a der Handwerkzeugkofferhaltevorrichtung 10a aus dem Kofferaufnahmebereich 16a heraus. Bei dem Ladevorgang bewirken die Kraftelemente 24a Kräfte, die die Ladespule 18a in Richtung des Kofferaufnahmebereichs 16a drücken. Das Lagermittel 20a drückt die Ladefläche 44a der Handwerkzeugkofferhaltevorrichtung 10a an den Handwerkzeugkoffer 14a an.

Die Ladespulen 18a weisen jeweils eine Leiterschleife 46a und einen Spulenkern 48a auf. Die Ladespulen 18a sind dazu vorgesehen, eine Energie senkrecht zu der Ladefläche 44a an eine in dem Kofferaufnahmebereich 16a angeordnete Ladespule 30a der Handwerkzeugakkus 40a zu übertragen. Die Handwerkzeugkofferhaltevorrichtung 10a umfasst eine Ladeelektronik 50a, die dazu vorgesehen ist, einen Ladevorgang der Handwerkzeugakkus 40a zu regeln. Dazu kommuniziert die Ladeelektronik 50a auf einem, dem Fachmann als sinnvoll erscheinenden Weg mit der Ladeelektronik 50a.

Die Haltevorrichtung 12a der Handwerkzeugkofferhaltevorrichtung 10a weist zwei Haltemittel 26a, 28a auf, die dazu vorgesehen sind, mit den zwei Haltemitteln 52a, 54a des Handwerkzeugkoffers 14a werkzeuglos lösbar zu verrasten. Die Haltemittel 52a, 54a der Handwerkzeugkofferhaltevorrichtung 10a sind als Rastvertiefungen ausgebildet. Die Haltemittel 52a, 54a des Handwerkzeugkoffers 14a sind als Rasthaken ausgebildet. Die Haltemittel 52a, 54a des Handwerkzeugkoffers 14a verrasten mit einer Bewegung nach außen. Die Haltemittel 26a, 28a der Handwerkzeugkofferhaltevorrichtung 10a sind auf zwei gegenüberliegenden Seiten des Kofferaufnahmebereichs 16a angeordnet.

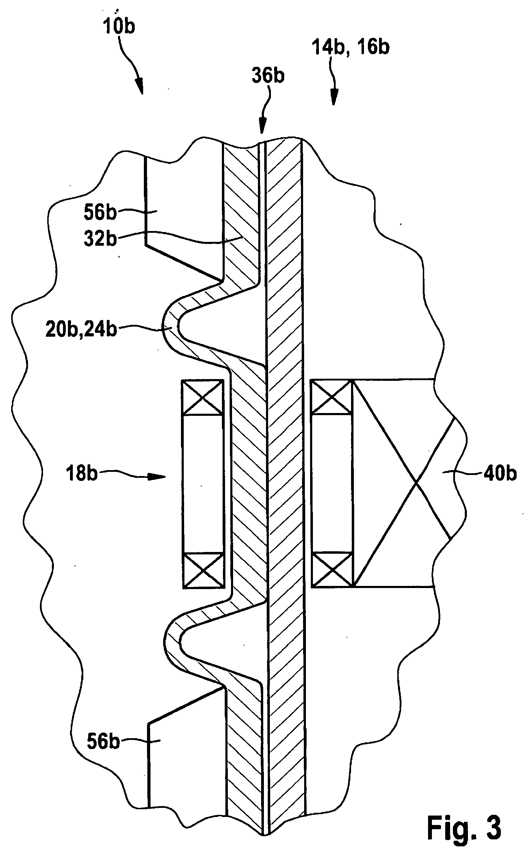

In den Figuren 3 bis 6 sind vier weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 und 2, verwiesen werden kann. Zur Unterscheidung der Ausführungsbeispiele ist der Buchstabe a den Bezugszeichen des Ausführungsbeispiels in den Figuren 1 und 2 nachgestellt. In den Ausführungsbeispielen der Figuren 3 bis 6 ist der Buchstabe a durch die Buchstaben b bis e ersetzt. Die Figur 3 zeigt eine Schnittdarstellung eines Systems 36b mit einer Handwerkzeugkofferhaltevorrichtung 10b, einem Handwerkzeugkoffer 14b und einem Handwerkzeugakku 40b. Die Handwerkzeugkofferhaltevorrichtung 10b umfasst eine in Figur 1 dargestellte Haltevorrichtung, die bei einem Ladevorgang den Handwerkzeugkoffer 14b in einem Kofferaufnahmebereich 16b der Handwerkzeugkofferhaltevorrichtung 10b lösbar befestigt. Die Handwerkzeugkofferhaltevorrichtung 10b umfasst eine Ladespule 18b, ein Lagermittel 20b, ein Kraftelement 24b und ein Haltevorrichtungsgehäuse 32b. Das Lagermittel 20b und das Kraftelement 24b sind einstückig ausgebildet. Das Lagermittel 20b und das Kraftelement 24b sind einstückig mit dem Haltevorrichtungsgehäuse 32b ausgebildet.

Das Lagermittel 20b lagert die Ladespule 18b und die Haltevorrichtung relativ zueinander bewegbar. Das Kraftelement 24b bewirkt zumindest bei einem Ladevorgang eine Kraft, die die Ladespule 18b in Richtung des Kofferaufnahmebereichs 16b drückt. Das Lagermittel 20b und das Kraftelement 24b sind als ein flexibler Bereich des Haltevorrichtungsgehäuse 32b ausgebildet. Der Bereich des Lagermittels 20b und des Kraftelements 24b ist ringförmig mit einem U-förmigen Querschnitt parallel zu einer Wirkrichtung der Ladespule 18b ausgebildet. Der Handwerkzeugkoffer 14b weist Versteifungsrippen 56b auf, die einen an den Bereich des Lagermittels 20b und des Kraftelements 24b angrenzenden Bereich versteifen.

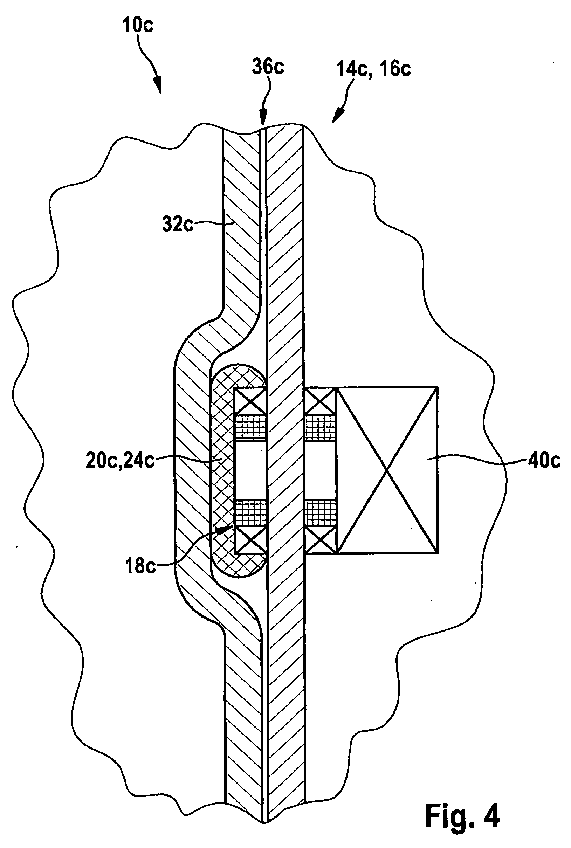

Die Figur 4 zeigt eine Schnittdarstellung eines Systems 36c mit einer Handwerkzeugkofferhaltevorrichtung 10c, einem Handwerkzeugkoffer 14c und einem Handwerkzeugakku 40c. Die Handwerkzeugkofferhaltevorrichtung 10c umfasst eine in Figur 1 dargestellte Haltevorrichtung, die bei einem Ladevorgang den Handwerkzeugkoffer 14c in einem Kofferaufnahmebereich 16c der Handwerkzeugkofferhaltevorrichtung 10c lösbar befestigt. Die Handwerkzeugkofferhaltevorrichtung 10c umfasst eine Ladespule 18c, ein Lagermittel 20c, ein Kraftelement 24c und ein Haltevorrichtungsgehäuse 32c. Das Lagermittel 20c und das Kraftelement 24c sind einstückig ausgebildet. Das Lagermittel 20c und das Kraftelement 24c sind getrennt von dem Haltevorrichtungsgehäuse 32c ausgebildet. Das Kraftelement 24c ist wirkungsmäßig zwischen dem Haltevorrichtungsgehäuse 32c und der Ladespule 18c angeordnet.

Das Lagermittel 20c lagert die Ladespule 18c und die Haltevorrichtung relativ zueinander bewegbar. Das Kraftelement 24c bewirkt zumindest bei einem Ladevorgang eine Kraft, die die Ladespule 18c in Richtung des Kofferaufnahmebereichs 16c drückt. Das Lagermittel 20c und das Kraftelement 24c sind als ein durch den Handwerkzeugkoffer 14c verformbares Kissen ausgebildet. Die Ladespule 18c ist in eine Seite des Kraftelements 24c eingegossen. Das Lagermittel 20c und das Kraftelement 24c sind an einer Außenseite des Haltevorrichtungsgehäuses 32c angeordnet. Somit ist das Lagermittel 20c bei einem Ladevorgang zwischen dem Haltevorrichtungsgehäuse 32c und dem Handwerkzeugkoffer 14c angeordnet.

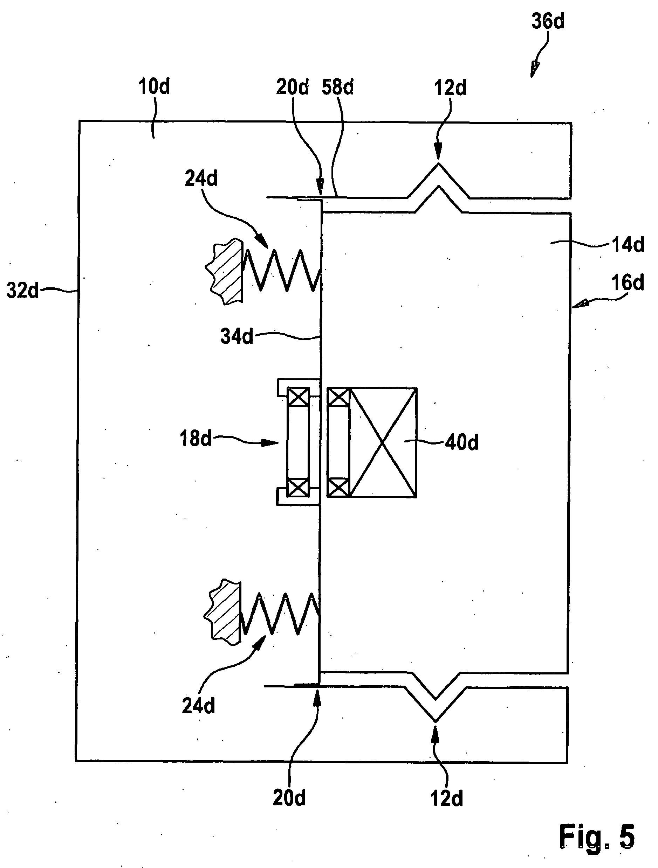

Die Figur 5 zeigt eine Schnittdarstellung eines Systems 36d mit einer Handwerkzeugkofferhaltevorrichtung 10d, einem Handwerkzeugkoffer 14d und einem Handwerkzeugakku 40d. Die Handwerkzeugkofferhaltevorrichtung 10d umfasst eine Haltevorrichtung 12d, die bei einem Ladevorgang den Handwerkzeugkoffer 14d in einem Kofferaufnahmebereich 16d der Handwerkzeugkofferhaltevorrichtung 10d lösbar befestigt. Die Handwerkzeugkofferhaltevorrichtung 10d umfasst eine Ladespule 18d, ein Lagermittel 20d, zwei Kraftelemente 24d und ein Haltevorrichtungsgehäuse 32d. Das Lagermittel 20d und die Kraftelemente 24d sind getrennt ausgebildet. Die Kraftelemente 24d sind getrennt von dem Haltevorrichtungsgehäuse 32d ausgebildet. Das Lagermittel 20d ist teilweise einstückig mit dem Haltevorrichtungsgehäuse 32d ausgebildet.

Das Haltevorrichtungsgehäuse 32d ist mehrteilig aufgebaut. Das Lagermittel 20d lagert einen ersten Bereich 58d des Haltevorrichtungsgehäuses 32d relativ zu einem zweiten Bereich 34d des Haltevorrichtungsgehäuses 32d von dem Handwerkzeugkoffer 14d bewegbar. Der erste Bereich 58d des Haltevorrichtungsgehäuses 32d ist relativ zu der Haltevorrichtung 12d unbeweglich. Der zweite Bereich 34d des Haltevorrichtungsgehäuses 32d ist relativ zu der Ladespule 18d unbeweglich. Somit lagert das Lagermittel 20d die Ladespule 18d und die Haltevorrichtung 12d relativ zueinander bewegbar. Die Kraftelemente 24d bewirken zumindest bei einem Ladevorgang eine Kraft, die die Ladespule 18d in Richtung des Kofferaufnahmebereichs 16d drückt. Dazu sind die Kraftelemente 24d wirkungsmäßig zwischen dem ersten Bereich 58d und dem zweiten Bereich 34d angeordnet. Die Kraftelemente 24d sind als Federn ausgebildet.

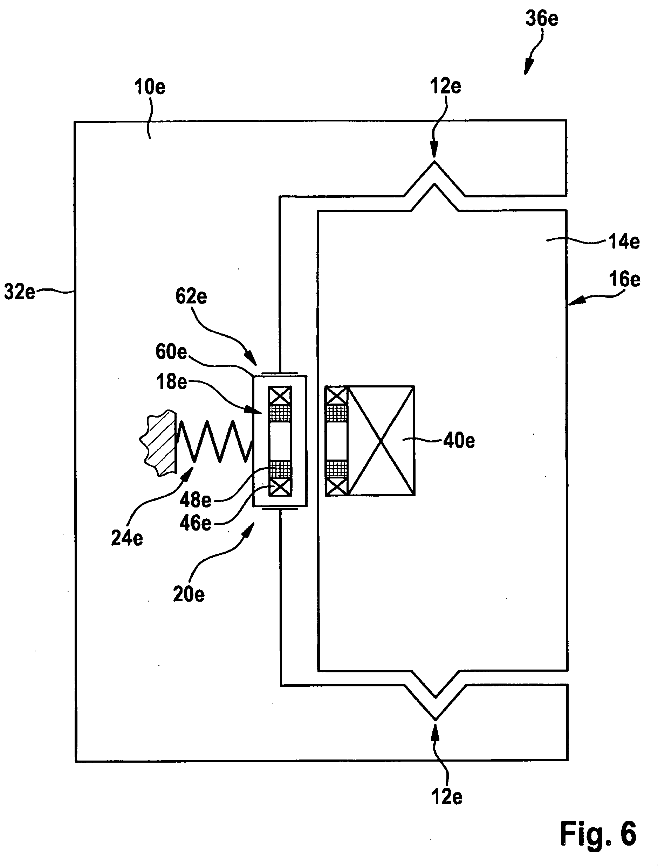

Die Figur 6 zeigt eine Schnittdarstellung eines Systems 36e mit einer Handwerkzeugkofferhaltevorrichtung 10e, einem Handwerkzeugkoffer 14e und einem Handwerkzeugakku 40e. Die Handwerkzeugkofferhaltevorrichtung 10e umfasst eine Haltevorrichtung 12e, die bei einem Ladevorgang den Handwerkzeugkoffer 14e in einem Kofferaufnahmebereich 16e der Handwerkzeugkofferhaltevorrichtung 10e lösbar befestigt. Die Handwerkzeugkofferhaltevorrichtung 10e umfasst eine Ladespule 18e, ein Lagermittel 20e, ein Kraftelement 24e und ein Haltevorrichtungsgehäuse 32e. Das Lagermittel 20e und das Kraftelement 24e sind getrennt ausgebildet. Das Kraftelement 24e ist getrennt von dem Haltevorrichtungsgehäuse 32e ausgebildet. Das Lagermittel 20e ist teilweise einstückig mit dem Haltevorrichtungsgehäuse 32e ausgebildet.

Die Ladespule 18e weist ein Spulengehäuse 60e auf, das eine Leiterschleife 46e und einen Spulenkern 48e der Ladespule 18e verbindet. Das Spulengehäuse 60e ist teilweise einstückig mit dem Lagermittel 20e ausgebildet. Das Lagermittel 20e lagert die Ladespule 18e und die Haltevorrichtung 12e relativ zueinander bewegbar. Das Haltevorrichtungsgehäuse 32e weist eine Aussparung 62e auf, in der die Ladespule 18e bewegbar gelagert ist. Das Kraftelement 24e bewirkt zumindest bei einem Ladevorgang eine Kraft, die die Ladespule 18e in Richtung des Kofferaufnahmebereichs 16e drückt. Dazu ist das Kraftelement 24e wirkungsmäßig zwischen dem Spulengehäuse 60e und dem Haltevorrichtungsgehäuse 32e angeordnet. Das Kraftelement 24e ist als eine Feder ausgebildet.

## Patentansprüche

1. Handwerkzeugkofferhaltevorrichtung mit zumindest einer Haltevorrichtung (12a, 12d, 12e), die dazu vorgesehen ist, einen Handwerkzeugkoffer (14a-e) in einem Kofferaufnahmebereich (16a-e) lösbar zu befestigen, **gekennzeichnet durch** zumindest eine Ladespule (18a-e) und ein Lagermittel (20a-e), das dazu vorgesehen ist, die Ladespule (18a-e) und die Haltevorrichtung (12a, 12d, 12e) relativ zueinander bewegbar zu lagern.

2. Handwerkzeugkofferhaltevorrichtung nach Anspruch 1, **dadurch gekennzeichnet, dass** das Lagermittel (20a-e) dazu vorgesehen ist, die Ladespule (18a-e) in Richtung des Kofferaufnahmebereichs (16a-e) bewegbar zu lagern.

3. Handwerkzeugkofferhaltevorrichtung nach Anspruch 1 oder 2, **gekennzeichnet durch** zumindest ein Kraftelement (24a-e), das dazu vorgesehen ist, eine Kraft zu bewirken, die zumindest die Ladespule (18a-e) in Richtung des Kofferaufnahmebereichs (16a-e) drückt.

4. Handwerkzeugkofferhaltevorrichtung nach Anspruch 3, **dadurch gekennzeichnet, dass** das Kraftelement (24a-c) und das Lagermittel (20a-c) zumindest teilweise einstückig ausgebildet sind.

5. Handwerkzeugkofferhaltevorrichtung nach Anspruch 4, **dadurch gekennzeichnet, dass** das Kraftelement (24a) und das Lagermittel (20a) einstückig mit einem Haltevorrichtungsgehäuse (32a) ausgebildet sind.

6. Handwerkzeugkofferhaltevorrichtung nach Anspruch 4, **dadurch gekennzeichnet, dass** das Lagermittel (20b) und das Kraftelement (24b) als ein flexibler Bereich des Haltevorrichtungsgehäuse (32b) ausgebildet sind.

7. Handwerkzeugkofferhaltevorrichtung zumindest nach Anspruch 3, **dadurch gekennzeichnet, dass** das Kraftelement (24d-e) und das Lagermittel (20d-e) getrennt ausgebildet sind.

8. Handwerkzeugkofferhaltevorrichtung nach einem der vorhergehenden Ansprüche, **dadurch gekennzeichnet, dass** die Haltevorrichtung (12a, 12d, 12e) zumindest ein Haltemittel (26a, 28a) aufweist, das dazu vorgesehen ist, den Handwerkzeugkoffer (14a-e) zu verrasten.

9. Handwerkzeugkofferhaltevorrichtung nach Anspruch 8, **dadurch gekennzeichnet, dass** die Haltevorrichtung (12a, 12d, 12e) zwei Haltemittel (26a, 28a) aufweist, welche auf zwei gegenüberliegenden Seiten des Kofferaufnahmebereichs (16a) angeordnet sind.

10. Handwerkzeugkofferhaltevorrichtung nach einem der vorhergehenden Ansprüche, **dadurch gekennzeichnet, dass** die Ladespule (18a-e) dazu vorgesehen ist, eine Energie auf eine in dem Kofferaufnahmebereich (16a-e) angeordnete Ladespule (30a) zu übertragen.

11. Handwerkzeugkofferhaltevorrichtung nach einem der vorhergehenden Ansprüche, **gekennzeichnet durch** ein Haltevorrichtungsgehäuse (32a; 32b), das zumindest teilweise einstückig mit dem Lagermittel (20a; 20b) ausgebildet ist.

12. Handwerkzeugkofferhaltevorrichtung nach einem der Ansprüche 1 bis 10, **gekennzeichnet durch** ein Haltevorrichtungsgehäuse (32c-e), das getrennt von dem Lagermittel (20c-e) ausgebildet ist.

13. Handwerkzeugkofferhaltevorrichtung nach Anspruch 3 und 12, **dadurch gekennzeichnet, dass** das Kraftelement (24d) zumindest einen Bereich (34d) des Haltevorrichtungsgehäuses (32d) bewegbar lagert.

14. Handwerkzeugkofferhaltevorrichtung nach Anspruch 3 und 12, **dadurch gekennzeichnet, dass** das Kraftelement (24c; 24e) wirkungsmäßig zwischen dem Haltevorrichtungsgehäuse (32c; 32e) und der Ladespule (18c; 18e) angeordnet ist.

15. Handwerkzeugkofferhaltevorrichtung nach einem der vorhergehenden Ansprüche, **dadurch gekennzeichnet, dass** die Handwerkzeugkofferhaltevorrichtung (10a-e) eine Ladeelektronik (50a) umfasst, die dazu vorgesehen ist, einen Ladevorgang zu regeln.

16. Handwerkzeugkofferhaltevorrichtung nach einem der vorhergehenden Ansprüche, **dadurch gekennzeichnet, dass** eine Ladefläche (44a) der Handwerkzeugkofferhaltevorrichtung (10a), durch die die Ladespule (18a) eine Ladeenergie sendet, eine Außenfläche des Haltevorrichtungsgehäuses (32a) bildet und in dem Kofferaufnahmebereich (16a) angeordnet ist.

17. System mit einer Handwerkzeugkofferhaltevorrichtung (10a-e) nach einem der vorhergehenden Ansprüche und zumindest einem Handwerkzeugkoffer (14a-e), der zumindest eine zu der Haltevorrichtung (12a, 12d, 12e) der Handwerkzeugkofferhaltevorrichtung (10a-e) korrespondierende Haltevorrichtung (38a) aufweist.

18. System nach Anspruch 17, **dadurch gekennzeichnet, dass** das Lagermittel (20a) durch ein Befestigen des Handwerkzeugkoffers (14a) in dem Kofferaufnahmebereich (16a) derart verformbar ist, dass der Handwerkzeugkoffer (14a) eine Ladefläche (44a) der Handwerkzeugkofferhaltevorrichtung (10a) aus dem Kofferaufnahmebereich (16a) herausdrückt und das Lagermittel (20a) die Ladefläche (44a) der Handwerkzeugkofferhaltevorrichtung (10a) an den Handwerkzeugkoffer (14a) andrückt.

## Claims

1. Hand-tool-case holding device having at least one holding device (12a, 12d, 12e) which is intended to fasten a hand-tool case releasably in a case receiving region (16a-e), **characterized by** at least one charging coil (18a-e) and a bearing means (20a-e) which is intended to mount the charging coil (18a-e) and the holding device (12a, 12d, 12e) in a movable manner relative to one another.

2. Hand-tool-case holding device according to Claim 1, **characterized in that** the bearing means (20a-e) is intended to mount the charging coil (18a-e) in a movable manner in the direction of the case receiving region (16a-e).

3. Hand-tool-case holding device according to Claim 1 or 2, **characterized by** at least one force element (24a-e) which is intended to bring about a force which pushes at least the charging coil (18a-e) in the direction of the case receiving region (16a-e).

4. Hand-tool-case holding device according to Claim 3, **characterized in that** the force element (24a-c) and the bearing means (20a-c) are configured integrally at least in part.

5. Hand-tool-case holding device according to Claim 4, **characterized in that** the force element (24a) and the bearing means (20a) are configured integrally with a holding-device housing (32a).

6. Hand-tool-case holding device according to Claim 4, **characterized in that** the bearing means (20b) and the force element (24b) are configured as a flexible region of the holding-device housing (32b).

7. Hand-tool-case holding device at least according to Claim 3, **characterized in that** the force element (24d-e) and the bearing means (20d-e) are configured separately.

8. Hand-tool-case holding device according to one of the preceding claims, **characterized in that** the holding device (12a, 12d, 12e) has at least one holding means (26a, 28a) which is intended to lock the hand-tool case (14a-e) in place.

9. Hand-tool-case holding device according to Claim 8, **characterized in that** the holding device (12a, 12d, 12e) has two holding means (26a, 28a) which are arranged on two opposite sides of the case receiving region (16a).

10. Hand-tool-case holding device according to one of the preceding claims, **characterized in that** the charging coil (18a-e) is intended to transfer energy to a charging coil (30a) arranged in the case receiving region (16a-e).

11. Hand-tool-case holding device according to one of the preceding claims, **characterized by** a holding-device housing (32a; 32b) which is configured integrally with the bearing means (20a; 20b) at least in part.

12. Hand-tool-case holding device according to one of Claims 1 to 10, **characterized by** a holding-device housing (32c-e) which is configured separately from the bearing means (20c-e).

13. Hand-tool-case holding device according to Claims 3 and 12, **characterized in that** the force element (24d) mounts at least one region (34d) of the holding-device housing (32d) in a movable manner.

14. Hand-tool-case holding device according to Claims 3 and 12, **characterized in that** the force element (24c; 24e) is arranged operatively between the holding-device housing (32c; 32e) and the charging coil (18c; 18e).

15. Hand-tool-case holding device according to one of the preceding claims, **characterized in that** the hand-tool-case holding device (10a-e) comprises charging electronics (50a) which are intended to regulate a charging operation.

16. Hand-tool-case holding device according to one of the preceding claims, **characterized in that** a charging surface (44a) of the hand-tool-case holding device (10a), through which the charging coil (18a) emits charging energy, forms an outer surface of the holding-device housing (32a) and is arranged in the case receiving region (16a).

17. System having a hand-tool-case holding device (10a-e) according to one of the preceding claims and at least one hand-tool case (14a-e) which has at least one holding device (38a) corresponding to the holding device (12a, 12d, 12e) of the hand-tool-case holding device (10a-e).

18. System according to Claim 17, **characterized in that** the bearing means (20a) is deformable by the fastening of the hand-tool case (14a) in the case receiving region (16a) such that the hand-tool case (14a) pushes a charging surface (44a) of the hand-tool-case holding device (10a) out of the case receiving region (16a) and the bearing means (20a) pushes the charging surface (44a) of the hand-tool-case holding device (10a) against the hand-tool case (14a).

## Revendications

1. Dispositif de fixation de mallette pour outils à main comportant au moins un dispositif de fixation (12a, 12d, 12e) qui est conçu pour fixer de manière amovible une mallette pour outils à main (14a-e) dans une région de réception de mallette (16a-e), **caractérisé par** au moins une bobine de charge (18a-e) et un moyen de support (20a-e) qui est prévu pour supporter de manière mobile l'un par rapport à l'autre la bobine de charge (18a-e) et le dispositif de fixation (12a, 12d, 12e)

2. Dispositif de fixation de mallette pour outils à main selon la revendication 1, **caractérisé en ce que** le moyen de support (20a-e) est conçu pour supporter de manière mobile la bobine de charge (18a-e) dans la direction de la région de réception de mallette (16a-e).

3. Dispositif de fixation de mallette pour outils à main selon la revendication 1 ou 2, **caractérisé par** au moins un élément de force (24a-e) qui est conçu pour exercer une force comprimant au moins la bobine de charge (18a-e) dans la direction de la région de réception de mallette (16a-e).

4. Dispositif de fixation de mallette pour outils à main selon la revendication 3, **caractérisé en ce que** l'élément de force (24a-c) et le moyen de support (20a-c) sont réalisés au moins partiellement de manière solidaire.

5. Dispositif de fixation de mallette pour outils à main selon la revendication 4, **caractérisé en ce que** l'élément de force (24a) et le moyen de support (20a) sont réalisés de manière solidaire avec un boîtier pur dispositif de fixation (32a).

6. Dispositif de fixation de mallette pour outils à main selon la revendication 4, **caractérisé en ce que** le moyen de support (20b) et l'élément de force (24b) sont réalisés sous la forme d'une région souple du boîtier pour dispositif de fixation (32b).

7. Dispositif de fixation de mallette pour outils à main selon la revendication 3, **caractérisé en ce que** l'élément de force (24d-e) et le moyen de support (20de) sont réalisés de manière séparée.

8. Dispositif de fixation de mallette pour outils à main selon l'une quelconque des revendications précédentes, **caractérisé en ce que** le dispositif de fixation (12a, 12d, 12e) comprend au moins un moyen de fixation (26a, 28a) qui est conçu pour verrouiller la mallette pour outils à main (14a-e).

9. Dispositif de fixation de mallette pour outils à main selon la revendication 8, **caractérisé en ce que** le dispositif de fixation (12a, 12d, 12e) comprend deux moyens de fixation (26a, 28a) qui sont disposés sur deux faces opposées de la région de réception de mallette (16a).

10. Dispositif de fixation de mallette pour outils à main selon l'une quelconque des revendications précédentes, **caractérisé en ce que** la bobine de charge (18a-e) est conçue pour transmettre une énergie à une bobine de charge (30a) disposée dans la région de réception de mallette (16a-e).

11. Dispositif de fixation de mallette pour outils à main selon l'une quelconque des revendications précédentes, **caractérisé par** un boîtier pour dispositif de fixation (32a ; 32b) qui est réalisé au moins en partie de manière solidaire avec le moyen de support (20a ; 20b).

12. Dispositif de fixation de mallette pour outils à main selon l'une quelconque des revendications 1 à 10, **caractérisé par** un boîtier pour dispositif de fixation (32c-e) qui est réalisé de manière séparée du moyen de support (20c-e).

13. Dispositif de fixation de mallette pour outils à main selon les revendications 3 et 12, **caractérisé en ce que** l'élément de force (24d) supporte de manière mobile au moins une région (34d) du boîtier pour dispositif de fixation (32d).

14. Dispositif de fixation de mallette pour outils à main selon les revendications 3 et 12, **caractérisé en ce que** l'élément de force (24c ; 24e) est disposé de manière à exercer une action entre le boîtier pour dispositif de fixation (32c ; 32e) et la bobine de charge (18c ; 18e).

15. Dispositif de fixation de mallette pour outils à main selon l'une quelconque des revendications précédentes, **caractérisé en ce que** le dispositif de fixation de mallette pour outils à main (10a-e) comprend une électronique de charge (50a) qui est conçue pour réguler un processus de charge.

16. Dispositif de fixation de mallette pour outils à main selon l'une quelconque des revendications précédentes, **caractérisé en ce qu'**une surface de charge (44a) du dispositif de fixation de mallette pour outils à main (10a), au moyen de laquelle la bobine de charge (18a) émet de l'énergie de charge, forme une surface externe du boîtier pour dispositif de fixation (32a) et est disposée dans la région de réception de mallette (16a).

17. Système comportant un dispositif de fixation de mallette pour outils à main (10a-e) selon l'une quelconque des revendications précédentes, et au moins une mallette pour outils à main (14a-e) qui comporte au moins un dispositif de fixation (38a) correspondant au dispositif de fixation (12a, 12d, 12e) du dispositif de fixation de mallette pour outils à main (10a-e).

18. Système selon la revendication 17, **caractérisé en ce que** le moyen de support (20a) peut être déformé par une fixation de la mallette pour outils à main (14a) dans la région de réception de mallette (16a) de manière à ce que la mallette pour outils à main (14a) repousse vers l'extérieur une surface de charge (44a) du dispositif de fixation de mallette pour outils à main (10a), en dehors de la région de réception de mallette (16a), et **en ce que** le moyen de support (20a) repousse la surface de charge (44a) du dispositif de fixation de mallette pour outils à main (10a) contre la mallette pour outils à main (14a).
